Europäisches Patentamt

European Patent Office

Office européen des brevets

(11) Publication number: **0 409 197 A1**

# EUROPEAN PATENT APPLICATION

(21) Application number: 90113768.7

(22) Date of filing: 18.07.90

(51) Int. Cl.5: **C04B 41/45**

(30) Priority: 19.07.89 JP 184495/89

(43) Date of publication of application:
23.01.91 Bulletin 91/04

(84) Designated Contracting States:
DE GB

(71) Applicant: **NKK CORPORATION**
1-2, Marunouchi 1-chome Chiyoda-ku
Tokyo 100(JP)

(72) Inventor: **Nishio, Hiroaki, C/o Patent & License
Departmentent
NKK Keihin Bldg., 1-1 Minamiwatarida-cho
Kawasaki-ku, Kawasaki 210(JP)
Inventor: Takase, Akira, C/o Patent & License
Departmentent
NKK Keihin Bldg., 1-1 Minamiwatarida-cho
Kawasaki-ku, Kawasaki 210(JP)
Inventor: Tamura, Takashi, C/o Patent &
License Departmentent
NKK Keihin Bldg., 1-1 Minamiwatarida-cho
Kawasaki-ku, Kawasaki 210(JP)**

(74) Representative: **Füchsle, Klaus, Dipl.-Ing. et al
Hoffmann . Eitle & Partner Patentanwälte
Arabellastrasse 4e 4
D-8000 München 81(DE)**

(54) **Method for impregnating a melt into a porous body.**

(57) The invention describes a method for impregnating a melt into a porous body (16), comprising the steps of placing the porous body (16) in a lower portion (10) of a heat-resistant vessel (8) and a porous plate (9) on the porous body (16), supplying an impregnant (17) on the porous plate (9) in the vessel (8), putting the vessel (8), having the porous body (16), the porous plate (9) and the impregnant (17) therein into a heating furnace, heating and melting the impregnant (17) in the heating furnace, a melt being held on the porous plate (9) and generating a difference in pressures between the upper surface of the melt and the porous plate (9), the melt being supplied into the porous body (16) by the difference in pressures.

According to another example of the invention, a method for impregnating a melt into a porous body is described comprising the steps of placing a porous body (16) in a lower portion (10) of a heat-resistant vessel (8), supplying an impregnant (17) on the porous body (16) in said vessel (8), putting the vessel (8) having the porous body (16) and the impregnant (17) therein into a heating furnace, heating and melting the impregnant in the heating furnace, a melt being held on the porous body (16) and exhausting gas inside the porous body (16) from an exhaust hole made in the bottom of the vessel (8), the melt on the porous body (16) being supplied into the porous body (16) by an exhaust gas.

## Fig. 1

## METHOD FOR IMPREGNATING A MELT INTO A POROUS BODY

The present invention relates to a method for impregnating a melt into a porous body.

A method for impregnating a melt into a porous body is known as a method for preparing composite materials without dimensional contraction of the composite materials.

A method for impregnating metal of low melting point into a porous metallic body of high melting point is known. Tungsten or molybdenum is used as the metal of high melting point. Copper alloy, aluminium alloy, ferroalloy, nickel alloy or cobalt alloy is used as the metal of low melting point.

A method for impregnating the metal of low melting point into a porous ceramic body also is known. A silicon carbide whisker preform, an alumina compact or various sorts of bricks are used as the porous ceramic body. A method for impregnating magnesium alloy or pitch into a carbon fiber compact also is known.

The methods for impregnating a melt into a porous body are disclosed in the following four literatures:

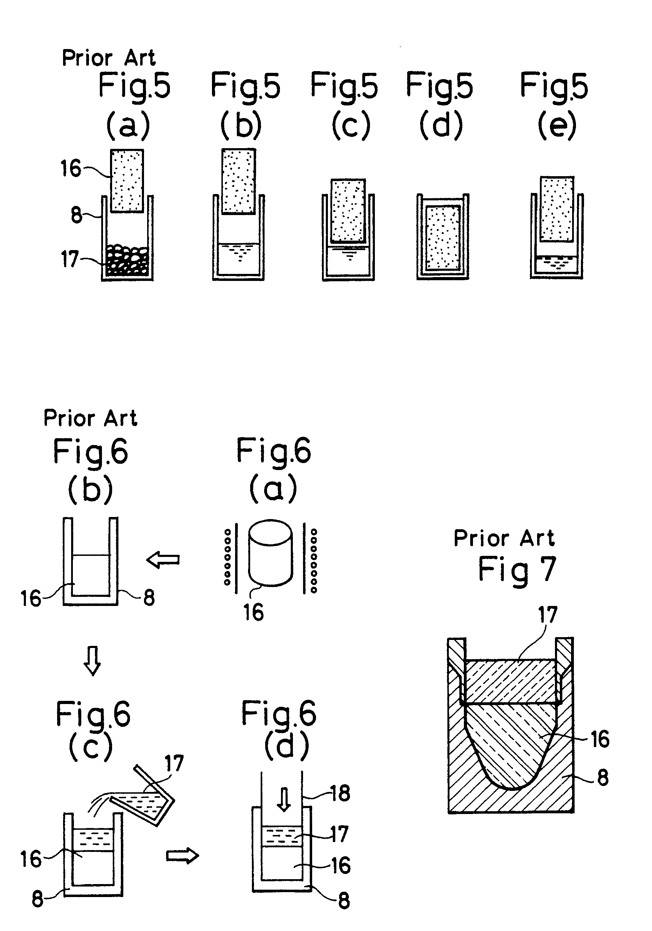

A first method is disclosed in " Nippon Kikai Gakukai " ( vol.19, Dec., 1988, p.1237, Akira ASARI and Yohichi INOUE ). Fig.5 (a) shows a state such that lumps of impregnant 17 are put into a vessel 8. The vessel 8, into which the impregnant 17 is put, is put into a heating furnace. The impregnant 17 is heated under a vacuum upto a temperature over the melting point of the impregnant 17. Fig.5 (b) shows a state such that the impregnant 17 has perfectly melted. Fig.5 (c) and (d) show a state such that a porous body is immersed into a melt. The impregnation of the melt into the porous body is promoted by introducing gas into the heating furnace if necessary and applying a pressure from the surface of the melt onto the melt. Thereafter, as shown in Fig.5 (e), the impregnated body is lifted and naturally cooled. Hereinafter, a material, into which an impregnant is impregnated, is referred to as an impregnated body

A second method is disclosed in " Nippon Kikai Gakukai " ( vol.25, No.5, 1986, p.447, Koichi OHORI, Hideo WATANABE and You TAKEUCHI ). It is an object of this prior art method to prepare a composite material of silicon carbide whisker reinforced aluminium base alloy. As shown in Fig.6 (a), a preformed body 16 of silicon carbide whisker which is a porous body prepared previously is heated to a predetermined temperature. As shown in Fig.6 (b), said preformed body 16 is put into a preheated metallic mold. As shown in Fig.6 (c), aluminium alloy 17 separately heated and melted in a crucible as impregnant is poured into said metallic mold 8. Next, as shown in Fig.6 (c), aluminium alloy 17 separately melted in a crucible as the impregnant is poured into said metallic mold. As shown in Fig.6 (d), successively, a melt is impregnated into the porous body 16 by applying a high pressure of about 1000 $kg/cm^2$ to molten metal by means of a plunger 18. The porous body 16 is kept as it is under pressure for a predetermined period of time and solidified.

A third method is shown in Fig. 7. This method aims at preparation of a composite material of molybdenum and ferroalloy. A compact 16 of molybdenum as a porous body is put into a vessel 8. A predetermined amount of impregnant 17 of lumps of ferroalloy is directly put on the compact 16 of molybdenum. The vessel 8 with the compact of molybdenum is put into a vacuum heating furnace and kept for a predetermined period of time in the vacuum heating furnace. Thereafter, the vessel with the compact of molybdenum is naturally cooled. Then, the impregnated body is taken out of the vessel 8.

A fourth method is disclosed in " Collection of the substance of lectures on 1983 Autumn Meeting " ( Powder and Powder Metallurgy Association, p.52, Sadao DATE and Uo KAWAKITA ). This prior art method aims at preparation of a composite material of tungsten and Cu-Ni-Zr alloy. A vessel of graphite is filled up with molybdenum powder and a fill-up of the molybdenum powder is used as a porous body. Impregnant of Cu-Ni-Zn alloy is put on the porous body. The impregnant is heated and melted and impregnated into said porous body. Then, the porous body is cooled and solidified, by which a desired composite material is obtained.

The following problems are pointed out in the aforementioned prior art methods. To execute the first method, the impregnated body has to be lifted and lowered in a vacuum heating furnace. Therefore, a remote control is required. This complictes a mechanism of the apparatus. In the second method, since there are four steps of individual operations, the mechanism of the apparatus is simple, but there is a difficulty such that the operations of the apparatus are complicated, which requires much labour. In the third method, alloys are used as the impregnants. In the case of the alloys, since there is some range of the melting points, the composition of the melt changes from the start of melting to the finish of the melting. When the impregnant begins to melt, a molten portion of the impregnant permeates into the porous body. In consequence, the composition of the impregnant after its permeation into the porous body changes depending on positions, into which the impregnant permeates. Accordingly, there is a possibility of not obtaining the impregnant having uniform properties. When reaction occurs between the impregnant and the porous body, paricularly, when a reaction product of high melting point is produced, the reaction product produced by a melt, into which the impregnant has permeated, can interfere with impregnation of the successive melt.

It is an object of the present invention to provide a method for impregnating a melt into a porous body by means of a simple operation without using a complicated mechanism.

To attain the aforementioned object, the present invention provides a method for impregnating a melt into a porous body, comprising the steps of:

placing a porous body in a lower portion of a heat-resistant vessel and a porous plate on said porous body;

supplying an impregnant on said porous plate in said vessel;

putting said vessel having the porous body, the porous plate and the impregnant therein into a heating furnace;

heating and melting said impregnant in the heating furnace, a melt being held on said porous plate; and

generating a difference in pressures between the upper surface of the melt and the porous plate, said melt being supplied into the porous body by the difference in pressures;

Another method for impregnating a melt into a porous body, comprising the steps of:

placing a porous body in a lower portion of a heat-resistant vessel;

supplying an impregnant on said porous body in said vessel;

putting said vessel having the porous body and the impregnant therein into a heating furnace;

heating and melting said impregnant in the heating furnace, a melt being held on said porous body; and

exhausting gas inside the porous body from an exhaust hole positioned in the bottom of said vessel, the melt on the porous body being supplied into the porous body.

The above objects and other objects and advantages of the present invention will become apparent from the detailed description which follows, taken in conjunction with the appended drawings.

Figs.1 to 4 are vertical sectional views illustrating apparatuses according to the present invention;

Figs.5 (a) to 5 (e) are explanatory views of the prior art methods; and

Fig.6 (a) to 6 (d) are schematic illustrations showing the other prior art methods.

Fig.7 is a vertical sectional view illustrating a state such that a porous body and an impregnant are put into a vessel in the prior art method.

In Preferred Embodiment-1 wherein a porous plate is used, a vessel has an upper chamber and a lower chamber, which are made by partitioning the vessel. A porous body is placed in the lower chamber. A porous plate is put on said porous body. An impregnant is supplied in the upper chamber on the porous plate. The vessel, having the porous body, the porous plate and the impregnant therein is put into a heating furnace. The impregnant is heated and melted in the heating furnace. A melt is held on the porous plate. When the impregnant is melted and converts to a uniform melt, a difference in pressures between the upper surface of the melt and the porous plate is caused. The melt is supplied by the difference in pressures into the porous body through the porous plate. The melt is impregnated into the porous body, by which an impregnated body as a composite material is prepared.

The impregnant is desired to be heated and melted in a vacuum or in an inert atmosphere. The inside of the heating furnace is evacuated by exhausting gas out of the heating furnace from an exhaust hole positioned in the heating furnace. The inside of the heating furnace is made to be of the inert atmosphere by introducing inert gas from a gas inlet arranged in the heating furnace. When an exhaust hole is aranged in the bottom of the vessel, gas inside the porous body put in the lower portion of the vessel can be easily exhausted and easily substituted for other gas.

When the impregnant is heated and melted in a vacuum, the difference in pressures between the upper surface of the melt and the porous plate can be generated by introducing inert gas into the heating furnace. When the impregnant is heated and melted in the inert atmosphere, the difference in pressures is generated by exhausting gas inside the porous body from the exhaust hole made in the bottom of the vessel to reduce the pressure in the porous body. When the difference in pressures is generated by reducing the pressure inside the porous body by exhausting gas inside the porous body, an apparatus for increasing the pressure inside the heating furnace is not necessary, by which the apparatus for impregnating a melt into a porous body can be simplified. Accordingly, a manufacturing cost of the impregnant can be reduced. The reduction of the pressure inside the porous body by means of exhaustion of gas from the exhaust hole positioned in the bottom of the vessel can be used together with the increase of the pressure by means of the introduction of inert gas into the heating furnace

The vessel used in the Preferred Embodiment-

1 incorpotes the impregnant into the upper chamber and the porous body into the lower chamber. For example, oxides such as alumina, magnesia, calcia, yttria, stabilized zirconia, silica and mullite are fit for materials of a vessel used for impregnation of a wide range of metals.

When alloy of low melting point of 800 °C or less such as aluminium alloy and magnesium alloy is impregnated, non-oxides such as silicon nitride, silicon carbide, titanium diboride and zircomiun diboride can also be used as the materials for the vessel. It is desired that the materials for the vessel have a little pores and sufficient densities to the extent that the permeation of the impregnant into the vessel can be ignored.

It is good that the inner shape of the vessel in the lower chamber corresponds substantially to the shape of the porous body to decrease the amount of the melt of the impregnant which flows out of the porous body. It is sufficient that the upper chamber of the vessel has the volume which can hold the melt of the impregnant. An opening is made in the upper portion of the vessel. It is an object of this opening to cause the atmosphere inside the heating furnace to contact said melt and to transfer the pressure of the atmosphere to the melt. This opening can be used as an exit port and an inlet port for the porous body and the impregnant and the diameter of the opening is desired to be as large as possible. The vacuum exhaust hole can be made in the lower portion of the vessel. The vacuum exhaust hole is used to suck the melt by evacuating the inside of the porous body and to cause the melt to impregnate into the porous body.

The porous plate is arranged between the upper chamber and the lower chamber. The porous plate holds the melt of the impregnant. The porous plate is arranged so that the porous plate can separate the melt from the porous body in all the area where they can contact each other to cause the melt not to directly contact the porous body at substantially atmospheric pressere. The porous plate can be fixed into the vessel or inserted into the vessel in the state of sliding on the surfaces of the inner walls of the vessel. The vessel can be divisible to cause the porous plate to be fixed and removed or to be inserted and taken out.

The porous plate like the vessel is made of materials which do not react with the impregnant and the porous body. Moreover, the materials of the porous plate are required to be materials which are not easily wetted by the melt of the impregnant. The materials of contact angle of 95 to 175° are selected. Oxides such as alumina, magnesia, calcia, yttria, stabilized zirconia, silica and mull ite are used as the materials for the porous plate. The porous plate having pores of to 1000μm in diameter is desired. When the diameter of the pores is

less than 10 μm, the difference in pressures between the upper surface of the melt and the porous plate should be large. When the diameter of the pores is over 1000 μm, the melt permeates into the porous plate by its weight.

Since the pressure inside the porous body is reduced before the impregnation of the melt into the porous body, the impregnant in the vessel is heated, the pressure inside the vessel being reduced. The difference in pressures between the upper surface of the melt and the porous plate is generated in order that the melt can be impregnated into the porous body. Accordingly, when the vacuum exhaust hole is not made in the bottom of the vessel, the heating furnace incorporating the vessel can be heated both in a vacuum and in an atmosphere under pressure. Therefore, an exhaust pipe which can evacuate the inside of the heating furnace and a gas inlet are connected to the heating furnace. Further, a heating mechanism is connected to the heating furnace.

The degree of vacuum should be high to the extent that there cannot be problems of an evaporation loss of the impregnant and the porous body. The degree of vacuum is determined to be from $10^{-4}$ to 0.5 Torr to evaporate impurities. Non-oxide gas such as argon, nitrogen, hydrogen and ammonia is disirable. When the impregnant is little oxidized, air and combustion gas of fossil fuel are also employed. The melt is pressurized so that the difference in pressures between the upper chamber and the lower chamber can be from 0.1 to 2000 kg/cm². When the pressure is 0.1 kg/cm², the melt can permeate into the porous body in many cases. The larger the difference in pressures the higher the rate of impregnation of the melt, and the melt can permeate sufficiently into minute pores.

A heater as the heating mechanism is usually arranged inside the heating furnace. It is good that the temperature of heating is determined to be slightly higher than the temperature wherein the impregnant is completely melted. The temperature of heating is usually from 650 to 1700 °C . Insulation material is arranged inside the heating furnace if necessary.

When the vacuum exhaust hole is made in the bottom of the vessel, the regulation of the atmosphere such as the decrease or the increase of the pressure or the change of gas inside the vessel can be easily carried out. It is sufficient that the heating furnace incorporating the vessel is heated at nearly atmospheric pressure depending on the materials for the impregnant or the methods for manufacturing impregnant. When the oxidation of the impregnant is small, for example, said heating furnace can be simple to the extent that heat radiation is decreased so that the impregnant can be melt. When a problem of the oxidation of the impregnant is posed, an airtightness to the extent that surroundings of the impregnant or the melt can be kept in a non-oxidation atmosphere is required. The sorts, heating conditions and the difference in pressures of the atmospheric gases are the same as those in the aforementioned furnace.

In Preferred Embodiment-1 of the present invention, if necessary, a filter having pores of 500 to 5000 $\mu$m in diameter can be put on the upper side of the porous plate. This is effective in removing the foreign objects in the melt. For example, the oxides covering the surface of the lumps of metal is mixed in the melt when the lumpish metal as the impregnant is melted. When those oxides are left as they are, most of them rise to the surface of molten metal and concentrate thereon. They are mixed in the melt, cover the porous plate and can interfere with the flow of the melt. Therefore, the arrangement of the filter is often effective.

When the melt is impregnated into the porous body by the use of Preferred Embodiment-1, the porous body, the porous plate and the impregnant are incorporated in the vessel in this order. Subsequently, when the vacuum exhaust hole is not made in the bottom of the vessel, firstly, the inside of the heating furnace is evacuated and then the impregnant is melted. When the melt is pressurized by introducing gas into the heating furnace, the melt passes through the porous plate and permeates into the porous body, by which the porous body is impregnated by the melt. When the porous body is sufficiently impregnated by the melt, the pressure on the melt is reduced to atmospheric pressure and the impregnated body as the composite material is obtained by naturally cooling the porous body impregnated by the melt.

In Preferred Embodiment-2 wherein the porous plate is not used, the vessel has the upper and lower chambers. The exhaust hole is made in the bottom of the vessel. The porous body is placed in the lower chamber. The impregnant is put into the upper chamber. The vessel incoporating the porous body and the impregnant is put into the heating furnace. The impregnant is heated and melted in the heating furnace. The melt is held on the porous body. When the impregnant is melted and converts into a uniform melt, the difference in pressures between the upper surface of the melt and the porous body is generated. The difference in pressures is generated by exhausting gas inside the porous body from the exhaust hole positioned in the lower portion of the vessel and reducing the pressure inside the porous body. The melt is supplied to the porous body by the difference in pressures. An impregnant as a composite material is prepared, the melt being impregnated into the porous body.

The impregnant is desired to be heated and melted in a vacuum or in an inert atmosphere. The inside of the heating furnace is evacuated by exhausting gas from the exhaust hole made in the bottom of the vessel. The inside of the heating furnace is made to be of an inert atmosphere by introducing inert gas from the gas inlet arranged in the heating furance. When the exhaust hole is made in the bottom of the vessel, gas inside the porous body put in the lower portion of the vessel can be easily exhausted and substituted for other gas.

When the melt is impregnated into the porous body, the difference in pressures is generated by exhausting gas inside the porous body from the exhaust hole made in the bottom of the vessel to reduce the pressure inside the porous body. The reduction of gas inside the porous body from the exhaust hole made in the bottom of the vessel can be carried out together with the introduction of inert gas into the heating furnace to increase the pressure inside the heating furance.

The porous body is desired to be made of materials which are not easily wetted by the melt of the impregnant. The materials of contact angle of 95 to 175 $^\circ$ are selected. The oxides such as alumina, magnesia, calcia, yttria, stabilized zirconia, silica or mullite are used as the materials for the porous body. The porous body having pores of 10 to 1000 $\mu$m in diameter is desired. When the diameter of the pores is less than 10$\mu$m, the difference in pressures between the surface of the melt and the porous body should be large. When the diameter of the pores is over 1000 $\mu$m, the melt permeates into the porous body by its weight.

Example 1

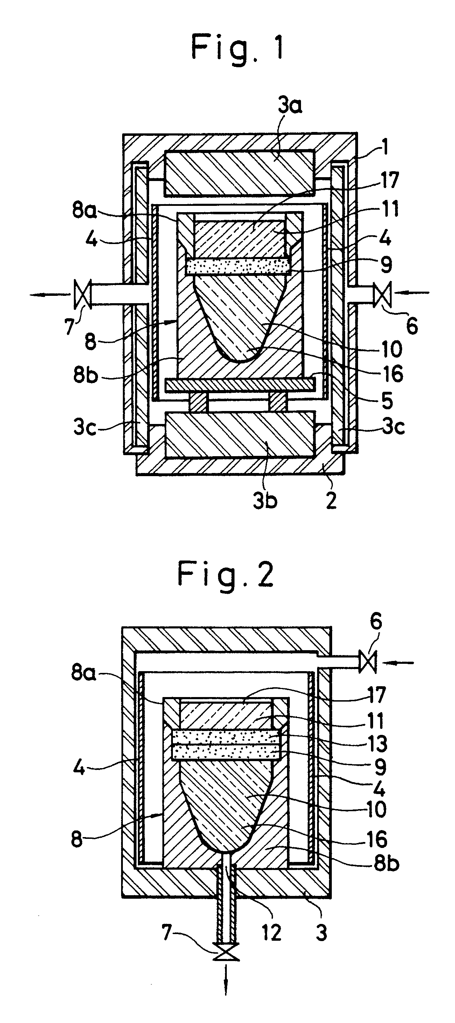

Fig.1 is a vertical sectional view illustrating the apparatus for impregnating a melt into a porous body, which was used for executing the method of Preferred Embodiment-1. The heating furance comprises a pressure vessel, heat insulation materials 3a, 3b and 3c and a heater 4. The pressure vessel is constituted with a cylidrical shell whose upper portion is closed and a lower cover closing an opening at the lower end thereof. The heat insulation materials 3a, 3b and 3c made of graphite cover substantially all the inner walls of the heating furnace. The heat insulation materials are divided into three members of upper heat insulation material 3a fixed to the ceiling of the heating furnace, side heat insulation material 3c covering surrounding surfaces of the heating furnace and lower heat insulation material 3b fixed to the floor of the heating furnace. Each of them is fixed to the inner walls of the pressure vessel. The heater 4 is cylindrical and mounted on the inner side of the heat insulation material 3. A pedestal 5 which carries the vessel 8 is put on the lower heat insulation material 3b. The gas conduit pipe and the exhaust pipe as the pressure control means are connected to the pressure vessel. The former is connected to an argon bomb ( not shown ) through a gas shut-off valve. The latter is connected to a rotary pump ( not shown ) through an exhaust valve 7.

The external shape of the vessel 8 made of high alumina is cylindrical. The inside of the vessel 8 is hollowed roundly, and the lower portion of the inside of the vessel 8 is formed into a torpedo-shape. The vessel 8 is divided into an upper portion 8a and a lower portion 8b so that the porous plate 9 can be inserted into the vessel 8. The vessel 8 is divided into the lower chamber 10 and the upper chamber 11 by the porous plate 9. The porous plate 9 is an alumina plate of 0.5 cm in thickness and has pores of 25 $\mu$m in average diameter and 40 $\mu$m in maximum diameter. Thee porous body is put in the lower chamber 10. The impregnant to be permeated into the porous body is put in the upper chamber 11.

A method for preparing a composite material of Mo-Fe-C group will now be described with specific reference to an example. 2 parts paraffin wax and 100 parts hexane by weight were added to 100 parts molybdenum powder of 5 $\mu$m in average particle size and stirred to mix them. The mixuture thereof was dispersed by applying supersonic waves. The dispersed mixture was atomized by the use of nitrogen gas and dried, by which granules of 30 to 70 $\mu$m were obtained. The granules were charged into a rubber mold, being vibrated. After the rubber mold filled up with the granules had been sealed, a cold isostatic press was applied to the rubber mold at a pressure of 3 t/cm$^2$. A porous body obtained in this way was machined into a torpedo-shaped body of the same shape as that of the lower chamber 10 of Fig. 1. The porous body was heated upto 500 °C in an atmosphere of nitrogen gas, by which the aforementioned paraffin wax was decomposed and removed.

The relative density of the porous body was 73%. The upper portion 8a of the vessel 8 and the porous plate 9 were removed. The aforementioned porous body 16 was inserted into the torpedo-shaped lower chamber 10. Then, the porous plate 9 and the upper portion of the vessel were again fixed to the vessel 8. A predetermined amount of the lumps of Fe-3.3% C as the impregnant was charged into the upper chamber 11. Next, the atmosphere inside the vessel was exhausted by opening the exhaust valve 7. The degree of vacuum was $10^{-3}$ Torr. The inside of the vessel was heated upto 1300°C , the degree of vacuum being kept, and was kept for 30 min. Thereafter, the work of the rotary pump was stopped and the exhaust valve was shut off. Then, argon gas was introduced into the vessel by opening the shut-off valve. The inside of the valve was kept at a pressure of 5 kg/cm$^2$ and at a temperature of 1300 °C for min. Thereafter, the argon gas was exhausted out of the vessel and the inside of the vessel was naturally cooled. As a result, there was not any residue on the porous plate 9 and the impregnated body, to which the porous plate adhered, was obtained. Then, the porous plate 9 was cut off and removed. The density of the impregnated body obtained was 9.56 g/cm$^3$. The impregnated body was dense and has no residual pore.

In the case of the example of the present invention, after the impregnant has been melted on the porous plate, the pressure is applied to the inside of the pressure vessel. Since the melt permeates into the porous body in a short time, any intermetallic compound does not occur, and the melt is uniformly impregnated into the porous body.

Control

The same composite material as that of the Example 1 was tried to prepare. The same molybdenum porous body 16 as that described in the Example 1 was put into the lower portion of the vessel 8 shown in Fig. 7. A predetermined amount of lumps of of Fe-3.3 % C was put directly on the porous body 16 without using the porous plate. The vessel 8, into which the lumps of 3.3%C was put, was put into the heating furnace as shown in Fig.1 and treated as in the Example 1. As a result, the impregnated body, wherein about a half of the Fe-3.3 % C charged into the vessel remained, was obtained. It was confirmed that the impregnant did not permeate into the lower portion of the molybdenum porous body.

This result is understood as follows: since the melt of Fe-3.3 % C is well wetted by molybdenum as the porous body and easily produces an intermetallic compound of high melting point, the melt permeates into the molybdenum porous body from a melted portion thereof and the pores therein are closed by producing the intermetallic compound in the molybdenum porous body, which interferes with the continuation of the permeation of the impregnant into the porous body.

Example 2

Fig.2 is a vertical sectional view illustrating another apparatus for impregnating a melt into a porous body, which was used for executing the method of Preferred Embodiment-1. In this Example, the vacuum exhaust hole was made in the lower portion of the vessel, and a filter was used on the porous plate. A heater 4 of molybdenum disilicide was arranged close to the surrounding inner walls of the cylindrical airtight heat insulation materials 3, whose upper and lower portions were closed, in the heating furnace of this Example. An argon gas supply line controlled at a pressure of 50 mm Aq. as a gas control means was connected to this heating furnace by means of the gas shut-off valve 6. The vessel 8 was arranged in the heating furnace. The vessel 8 was made of high alumina. The external shape of the vessel 8 was cylindrical. The inside of the vessel 8 was hollowed roundly. The lower portion of the vessel 8 was formed into a torpedo-shape. The vessel 8 was divided into the upper poriton 8a and 8b so that the porous plate 9 and the filter 13 could be inserted into the vessel 8. The vessel 8 was divided into the lower chamber 10 and the upper chamber 11 by the porous plate 9 and the filter 13. The porous plate 9 was an alumina plate of 0.5 cm in thickness and had pores of 25 $\mu$m in average diameter and 40 $\mu$m in maximum diameter. The filter 13 is an alumina plate of 0.5 cm and has pores of 1200$\mu$m in average diameter. The lower chamber 10 was a portion where the porous body was put, and the upper chamber 11 was a portion where the impregnant to be permeated into the porous body was put. The vacuum exhaust hole 12 was made in the bottom of the lower chamber 10. The vacuum exhaust hole was connected to a rotary pump for exhaustion ( not shown ), passing through the heat insulation material 3. An exhaust valve 7 was mounted in the middle of a pipe.

Substantially the same torpedo-shaped molybdenum porous body as that of the shape of the lower chamber 10 of the vessel 8 was prepared in the same way as in the Example 1. The upper portion 8a of the vessel 8, the porous plate 9 and the filter 13 were removed. The porous body 16 was put into the torpedo-shaped lower chamber 10. The porous plate 9, the filter 13 and the upper portion 8a of the vessel were again put. A predetermined amount of lumps 17 of Fe-3.3% C as the impregnant was charged into the upper chamber 11. Air inside the heating furnace was substituted for argon gas by opening the exhaust valve 7 and the gas shut-off valve 6. The impregnant was heated to 1300 °C argon gas being circulated inside the heating furnace. After the impregnant had, been heated and kept at 1300 °C for half an hour, the pressure inside the heating furnace was reduced to 10$^{-3}$ Torr by driving the rotary pump and exhausting argon gas from the vacuum exhaust hole 12. Then, after the impregnant had been heated and held for half an hour, the work of the rotary pump was stopped, the exhaust valve 7 and the gas shut-off valve were closed, and the impregnant was naturally cooled. As a result, there was not any residue on the filter 13, and an impregnated body, to which the filter 13 and the porous plate ahhered, was found. Subsequently, the porous body 9 and the filter 13 were cut and removed from the filter 13. The density of the impregnated body obtained was of 9.55 g/cm$^3$. The impregnated body was dense without residual pores.

In the case of the Example of the present invention, after the impregnant had been melted on the filter, gas was exhausted through the vacuum exhaust hole. Since the melt permeated into the porous body in a short time, any intermetal lic compound was not generated, and the melt was uniformly impregnated into the porous body.

Example 3

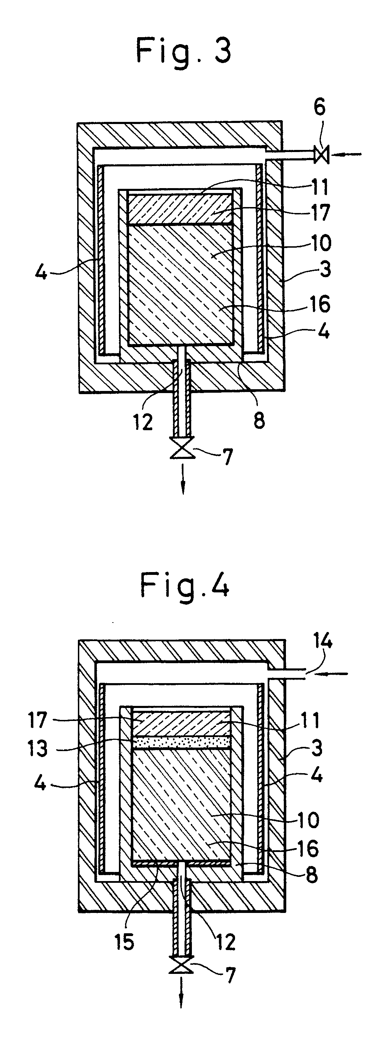

Fig.3 is a vertical sectional view illustrating an apparatus for executing the method of Preferred Embodiment-2. This Example shows the case where there is a vacuum exhaust hole in the lower portion of the vessel without using any porous body.

The vessel 8 was made of high alumina and had a shape of a cup, whose top and bottom had the same diameter. The vacuum exhaust hole 12 was made in the bottom of the vessel. The vacuum exhaust hole 12 was connected to the rotary pump ( not shown ) for exhausting gas, penetrating through the insulation material 3. The exhaust valve 7 was positioned in the middle of the pipe.

A cylindrical alumina porous body 16 having substantially the same inside diameter as that of the vessel of comparative density of 65% which had pores of 25$\mu$m in average diameter was put in the lower chamber of the vessel 8. Next, air inside the heating furnace was substituted for argon gas by opening the exhaust valve 7 and the gas shut-off valve 6. The inside of the heating furnace was heated upto 1550 °C , said argon gas being circulated. The temperature inside the heating furnace was kept as it was for 30 min. Thereafter, the pressure inside the heating furnace was reduced to 10$^{-3}$Torr by exhausting gas from the vacuum exhaust hole 12. The inside of the heating furnace was heated and kept for two hours, the degree of vacuum being kept. Then, the work of the rotary pump was stopped. The inside of the heating furnace was naturally cooled by closing the exhaust valve and the gas shut-off valve 6. As a result, a small amount of oxide having adhered to the upper portion of the impregnated was observed. However, the impregnant had sufficiently permeated into the porous body, by which a composite material of alumina-stainless steel was obtained.

Example 4

Fig.4 is a vertical sectional view illustrating another apparatus used for executing the method of Preferred Embodiment. In this Example, the filter is used on the porous body, and there is a vacuum exhaust hole in the lower portion of the vessel. In the apparatus as shown in Fig. 4, what is different from the apparatus as shown in Fig.3 was that the argon gas supply line was not connected to a casing made of insulation material 3, but the argon gas supply line was a communicating hole 14, that the filter was arranged between the porous body 16 and the impregnant 17 inside the vessel 8, and that a seal portion 15 was formed at the bottom of the vessel 8. The filter 13 was an alumina plate of 0.5 cm in thickness and had pores of 1200μm in average diameter.

The aforementioned seal portion 15 is formed by applying slurry of fine alumina powder ( 0.1 μm in particle size ) on the bottom of the vessel and drying the slurry. In the case of possiblility of formation of an excessive melt, when the seal portion 15 is made at the bottom of the vessel 8, the excessive melt is blocked by the seal portion 15, and a danger of flowing of the melt into the vacuum exhaust hole 12 can be avoided

A cylindrical alumina porous body 16 of comparative density of 65% which has pores of 25 μm in average diameter and substantially the same diameter as the inside diameter of the vessel was put in the lower chamber of the vessel 8. The filter 13 was put on the porous body. Further, lumps of stainless steel 17 ( SUS 304 ) as the impregnant was put in the upper chamber 11. Subsequently, the impregnant was heated upto 1550 °C by turning on electric current through the molybdenum disilicide heater. The temperature was kept as it was for 30 min. Then, the pressure inside the vessel was reduced to $10^{-3}$ Torr by driving the rotary pump to exhaust gas from the vacuum exhaust hole 12. Further, the inside of the vessel was kept for two hours by keeping the degree of vacuum and the temperature as they were. Thereafter, the work of the rotary pump was stopped. Then, the exhaust valve was closed and the inside of the vessel was naturally cooled. As a result, the impregnated body, to which the alumina filter 13 had adhered, was obtained. Oxides of the impregnant were concentrated in the alumina filter 13. When the alumina filter was removed, it was found that the porous body was sufficiently impregnated. In this way, the impregnated body as the composite material of alumina-stainless steel was obtained.

As described above, according to the present invention, the device for lifting and lowering the impregnant inside the airtight apparatus as the prior art device is not necessary. Therefore, the device can be simplified. Moreover, the operations in the prior art method as shown in Fig.6 which require much labour are not needed.

When the porous body is well wetted by the impregnant and permeated by the impregnant by the use of the prior art method as shown in the Control, there is a disadvantage such that the porous body is insufficiently impregnated and the composition of the porous body becomes unequal. This disadvantage can be removed by putting a porous plate, having pores of 10 to 1000μm in diameter and being not well wetted by the impregnant, between the impregnant and the porous body.

Reference signs in the claims are intended for better understanding and shall not limit the scope.

## Claims

1. A method for impregnating a melt into a porous body, characterized by comprising the steps of:
placing a porous body (16) in a lower portion (10) of a heat-resistant vessel (8) and a porous plate (9) on said porous body;
supplying an impregnant (17) on said porous plate in said vessel;
putting said vessel having the porous body, the porous plate and the impregnant therein into a heating furnace;
heating and melting said impregnant in the heating furnace, a melt being held on said porous plate; and
generating a difference in pressures between the upper surface of the melt and the porous plate, said melt being supplied into the porous body by the difference in pressures.

2. The method of claim 1, characterized in that
said impregnant is heated and melted under a vacuum; and
said difference in pressures between the upper surface of the melt and the porous plate is generated by introducing inert gas into the heating furnace and increasing a pressure inside the heating furnace.

3. The method of claim 1, characterized in that
said impregnant is heated and melted in an inert atmosphere; and
said difference in pressures between the upper surface of the melt and the porous plate is generated by exhausting gas inside the porous body from the exhaust hole made in the bottom of the vessel to reduce a pressure of gas inside the porous body.

4. The method of claim 3, characterized in that said pressure of gas inside the porous body is reduced to a pressure of $10^{-4}$ to 0.5 Torr.

5. The method of claim 1, characterized in that

said impregnant is heated and melted in an inert atmosphere; and

said difference in pressures between the upper surface of the melt and the porous plate is generated by introducing inert gas into the heating furnace, increasing a pressure of the gas inside the heating furnace and exhausting gas inside the porous body from the exhaust hole made in the bottom of the vessel.

6. The method of claim 5, characterized in that said gas inside the porous body is exhausted so that a pressure of the gas can be reduced to $10^{-4}$ to 0.5 Torr.

7. The method of claim 1, characterized in that said impregnant is heated to a temperature of 650 to 1700 °C in the heating furnace.

8. The method of claim 1, characterized by further comprising the step of putting a filter (13) on the porous plate, the impregnant being put on the filter.

9. The method of claim 8, characterized in that filter has pores of 500 to 5000μm in diameter.

10. The method of claim 1, characterized in that said porous plate has a contact angle of 95 to 175 °, at which the porous plate is wetted by the melt.

11. The method of claim 1, wherein said porous plate has pores of 10 to 1000 μm in diameter.

12. The method of claim 1, characterized in that said vessel is made of at least one selected from the group consisting of alumina, magnesia, calcia, yttria, stabilized zirconia, silica, silicon nitride, titanium diboride and zirconium diboride.

13. The method of claim 1, characterized in that said vessel can be divided into an upper portion (8a) and a lower portion (8b).

14. A method for impregnating a melt into a porous body , characterized by comprising the steps of:

placing a porous body (16) in a lower portion (10) of a heat-resistant vessel (8);

supplying an impregnant (17) on the porous body in said vessel;

putting the vessel having the porous body and the impregnant therein into a heating furnace;

heating and melting the impregnant in the heating furnace, a melt being held on the porous body; and

exhausting gas inside the porous body from an exhaust hole (12) made in the bottom of the vessel, the melt on the porous body being supplied into the porous body by an exhaust gas.

15. The method of claim 14, characterized by further comprising the step of introducing inert gas into the heating furnace to apply a pressure onto the melt on the porous body.

16. The method of claim 14, characterized in that said gas inside the porous body is exhausted so that a pressure of the gas can be reduced to $10^{-4}$ to 0.5 Torr.

17. The method of claim 14, characterized in that said vessel is made of at least one selected from the group consisting of alumina, magnesia, calcia, yttria, stabilized zirconia, silica, mullite, silicon nitride, titanium diboride and zirconium diboride.

18. The method of claim 14, characterized by, further comprising the step of putting a filter on the porous body, the impregnant being put on the filter.

19. The method of claim 18, characterized in that said filter has pores of 500 to 5000 μm in diamter.

20. The method of claim 14, characterized in that said vessel can be divided into an upper portion and a lower portion.

# Fig. 1

# Fig. 2

## Fig. 3

## Fig.4

11

Prior Art
Fig.5 (a)    Fig.5 (b)    Fig.5 (c)    Fig.5 (d)    Fig.5 (e)

16
8
17

Prior Art
Fig.6 (b)        Fig.6 (a)

16        8        16

Prior Art
Fig 7

17
16
8

Fig.6 (c)        Fig.6 (d)

17        18
16        17
16
8        8

**European Patent Office**

Application Number

# EUROPEAN SEARCH REPORT

## DOCUMENTS CONSIDERED TO BE RELEVANT

EP 90113768.7

| Category | Citation of document with indication, where appropriate, of relevant passages | Relevant to claim | CLASSIFICATION OF THE APPLICATION (Int. Cl.5) |
|---|---|---|---|
| A | <u>DE - A1 - 3 005 586</u><br>(KERNFORSCHUNGSANLAGE JÜLICH GMBH)<br>* Claim; example * | 1,2,<br>14,15 | C 04 B 41/45 |
| A | <u>DE - A1 - 3 005 587</u><br>(KERNFORSCHUNGSANLAGE JÜLICH GMBH)<br>* Claims 1,12 * | 1,14 | |

| TECHNICAL FIELDS SEARCHED (Int. Cl.5) |
|---|
| C 04 B |

The present search report has been drawn up for all claims

| Place of search | Date of completion of the search | Examiner |
|---|---|---|
| VIENNA | 30-10-1990 | BECK |